Europäisches Patentamt

European Patent Office

Office européen des brevets

(11) Publication number: 0 515 328 A1

# EUROPEAN PATENT APPLICATION

(21) Application number: 92830238.9

(22) Date of filing: 19.05.92

(51) Int. Cl.⁵: G02B 27/00

(30) Priority: 23.05.91 IT TO910381

(43) Date of publication of application:
25.11.92 Bulletin 92/48

(84) Designated Contracting States:
DE ES FR GB SE

(71) Applicant: FIAT AUTO S.p.A.
Corso Giovanni Agnelli 200
I-10135 Torino(IT)

(72) Inventor: Ferrari, Giancarla
Via Onorato Vigliani 160
I-10127 Torino(IT)
Inventor: Bianco, Roberto
Corso Vittorio Emanuele II 207
I-10139 Torino(IT)

(74) Representative: Bosotti, Luciano et al
c/o Jacobacci-Casetta & Perani S.p.A. Via
Alfieri, 17
I-10121 Torino(IT)

(54) **Device for displaying virtual images, particularly for reproducing images in a vehicle.**

(57) In order to achieve three-dimensional and depth characteristics in a virtual image (Iv) observed through an optical system (2) and corresponding to a two-dimensional image formed on a substrate (1) between the optical system (2) and its focal point (F), the flat substrate is kept generally inclined to the focal axis (X₂) of the optical system (2). The preferred application is to anticollision systems for vehicles such as motor vehicles.

## FIG. 4

The present invention relates in general to optical systems for reproducing artificial images in vehicles.

More specifically, the present invention has been developed with particular attention to its possible use in vehicles, particularly cars with anticollision systems which can be activated, for example, in adverse weather conditions (rain, fog, etc.).

A summary of the main requirements for such systems and their inherent problems, particularly as regards the reproduction of images in head-up display (or in short HUD mode) is given in Italian patent appln. No. 67624-A/89.

Although a system or display device such as that described in this prior application gives excellent results functionally, it provides an artificial display similar to that obtained from slides, microfilms and the like and, as with any device for projecting images of documents towards an observer, produces a substantially plane or flat image which reflects the two-dimensional nature of the original image projected and is therefore not very realistic.

A more realistic reproduction of the artificial image can be achieved by a multi-coloured representation rather than a strictly black and white one. However, particularly for applications in the automotive sector (where the user of the system is not expected to be particularly skilled or expert as he would be in aeronautical applications, particularly those of a military nature), it is important to produce an artificial image which, as well as being multi-coloured and of large format, also gives a general effect of depth and relief so that the artificial scene, which is usually used as a back-up for the view of the outside environment (which may be poor, for example, due to adverse weather conditions), is as realistic as possible.

The object of the present invention is therefore to provide means for displaying images such as, for example, a display device of the so-called VID (Virtual Image Display) type which can generate virtual images with depth characteristics so as to eliminate the problem of the accommodation of the observer's vision, and facilitate the change from looking at the view outside (which, although poor in adverse conditions is nevertheless three-dimensional) to looking at the artificial view on the display device. This avoids the conventional problems of known solutions such as, for example, the fact that the driver's vision has to be accommodated continually in order to carry out the same operation.

According to the present invention, this object is achieved by virtue of a display device having the specific characteristics recited in the claims which follow.

The invention thus provides a device for displaying artificial images which can be used to particular advantage in the automotive field and in which the scene reconstructed by the signal-processing system is seen in depth and in relief so as to achieve a very realistic effect and hence the greatest possible convenience for the driver.

In particular, the device according to the invention can show the driver the artificial scene produced dynamically by the electronic processing of data from image sensors in as realistic a manner as possible. Moreover, the virtual image which is created by the optical system, preferably - with reference to its application in the automotive field - on the lower portion of the windscreen in front of the driver, is perceived to be several meters in front of the passenger compartment thus avoiding the continual accommodation of the driver's eyes as they move from the display to the scene outside.

The display device according to the invention can also perform some functions required to provide data relating to the vehicle (for example, the display of symbols).

The invention will now be described, purely by way of non-limiting example, with reference to the appended drawings, in which:

Figures 1 to 3 show the general criteria for the acquisition of an artificial image and its reproduction in the passenger compartment of a vehicle according to known criteria,

Figure 4, which is substantially similar to Figure 3, shows the basic operating principle of the display device according to the invention, and

Figure 5 shows one possible embodiment of a display according to the invention.

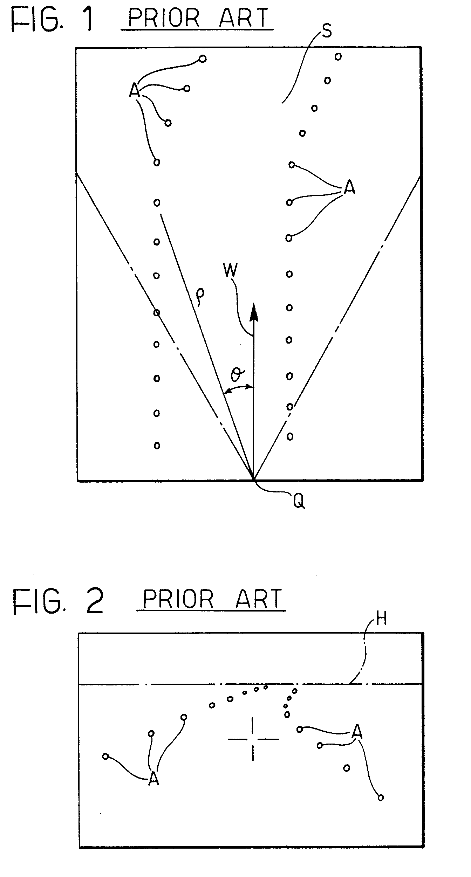

Figure 1 shows schematically (in plan) the normal situation of a moving vehicle such as, for example, a car (not shown) which, for the purposes of this schematic representation, may in fact be taken as the point Q.

The vehicle in question is assumed to be moving along a roadway S defined by obstacles or guide elements A (for example, kerbstones, studs, or the like fixed to the ground) which are generally "visible" for the purposes of forming an artificial image.

In general, the obstacles or guide elements A can normally be seen by the driver of the vehicle V but poor weather conditions (rain, fog, darkness, etc.) may make normal vision difficult and reduce visibility to a greater or lesser extent up to conditions of nil visibility.

According to widely known criteria described in the Italian application No. 67624-A/89 mentioned above, however, it is assumed that the obstacles A are rendered much more "visible", at least for the portion of the roadway S in front of the vehicle V, by means of auxiliary viewing systems, such as, for example, radar sensors and/or infrared sensors mounted on the vehicle V.

In particular, with reference to Figure 1, the vector $\vec{w}$ identifies the velocity of the vehicle V, the parameter $\rho$ its distance from the obstacles and $\theta$ the angle at which the obstacles A are observed (scanned) by the anticollision system in the vehicle V.

During the processing of the data supplied by the sensors mentioned above, the viewpoint (which was essentially some distance vertically above the scene) is moved to a point near the driver's viewpoint, producing a qualitative result such as that shown in Figure 2, in which the obstacles A (as detected by the artificial vision system) are presented and observed in perspective with reference to a horizon H, that is, from a viewpoint substantially comparable to (and as coincident as possible with) the driver's natural viewpoint of the scene outside.

The artificial image thus obtained is intended to be presented on a display device which comprises essentially a means for forming a two-dimensional image (typically a transparent element such as an SLM (spatial light modulator) on which a two-dimensional representation (image) of the scene in front of the car is formed (in known manner).

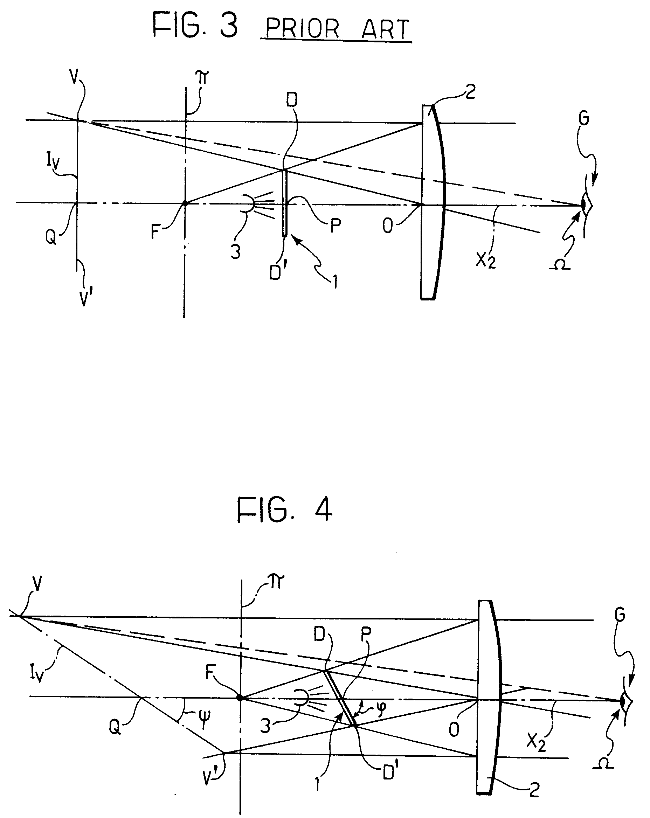

The flat element or substrate in question on which the two-dimensional image is formed is indicated 1 in Figures 3 to 5. The substrate (and hence image) is preferably transparent (for reasons which will become clear from the following description).

For an understanding of the principal elements which distinguish the solution of the invention from the solution according to the prior art, the image 1 may thus be considered substantially comparable to a slide or transparency observed by the driver G through an optical system which in practice is constituted by a lens 2 whose optical axis $X_2$ passes through the transparency 1.

The optical centre of the lens 2 is indicated O and its focal point, indicated F, is in the focal plane $\pi$. The transparency 1 is thus between the optical viewing system 2 and its focal point F.

Moreover, it is assumed that P is the point at which the transparency 1 intersects the focal axis $X_2$ and that D and D' identify the upper and lower edges of the transparency 1 respectively in the observation condition. The transparency is illuminated from behind by a light source 3 substantially aligned with the focal axis $X_2$. The virtual image of the transparency which is formed at a point Q in a plane intersecting the focal axis $X_2$ is indicated Iv. The upper and lower edges of the virtual image are indicated V and V' respectively.

Thus, if p is the distance between the centre O of the lens 2 and the point P and f is the focal length of the optical system, that is, the distance between the point O and the point F, it can be shown that, in the situation shown in Figure 3, if p < f, the virtual image Iv of the transparency 1 will be formed at a distance q (the distance between the point O and the point Q) conforming to the equation:

$$q = \frac{f \cdot p}{f - p} \qquad (1)$$

This equation is not linear since as p tends to f, q tends to infinity. This means in practice that the nearer the transparency 1 is to the focal point F, the further away and the larger is the virtual image Iv.

In order to produce a view with depth and relief, the operating principle of the display device of the invention is actually based on the non-linearity of the equation 1. The basic principle of the operation of the display device according to the invention is shown in Figure 4, in which the reference numerals and symbols used with reference to Figure 3 have been used to indicate identical or functionally equivalent elements.

The concept upon which the operation of the display device according to the invention is based is essentially that the transparency 1 (which, as can be seen, is flat) is not kept perpendicular to the focal axis $X_2$ but is rotated (about a horizontal axis with reference to the viewing arrangement to which Figures 3 and 4 relate) so as to be inclined at an angle generally smaller than 90° to the focal axis $X_2$ (which is assumed to be horizontal). In practice, it can be seen from a comparison of the diagrams of Figures 3 and 4 that the transparency 1 in Figure 4 has been rotated through an angle $\phi$ about a horizontal axis passing through the point P and perpendicular to the optical axis $X_2$.

As a result of this rotation and of the consequent inclination of the transparency 1 to the optical axis $X_2$,

the virtual image Iv is rotated about the point Q through an angle $\psi$ which conforms generally to a relationship of the type $\psi < \phi$.

More specifically, the transparency 1 is inclined so that its upper edge D moves towards the focal plane $\pi$ whilst its lower edge D' moves away from the focal plane $\pi$. In other words, the upper edge D moves away from the optical system 2, whilst the lower edge D' moves towards it. The upper edge V of the virtual image Iv thus moves further away (from the optical system 2) whilst the lower edge V' moves towards it, so that the virtual image is also inclined to the optical axis $X_2$. This takes place according to the non-linear relationship established by equation 1 which, in effect, also sanctions the enlargement of the dimensions (the distance (V-V') of the virtual image in comparison with the original dimensions of the transparency (the distance between the margins or edges D and D'), whilst the points P and Q remain fixed.

The vision of an observer G looking at the virtual image Iv in a system such as that shown in Figure 4 from a point $\Omega$ will thus have to be accommodated between the distance separating the point $\Omega$ (where the observer's eye is assumed to be) and the point V (the maximum distance) and the distance separating the point $\Omega$ and the point V' (the minimum distance), resulting in a perception of depth and relief.

Moreover, tests show that artificial images such as that shown in Figure 2 benefit from this perception of depth and relief to a particularly marked degree.

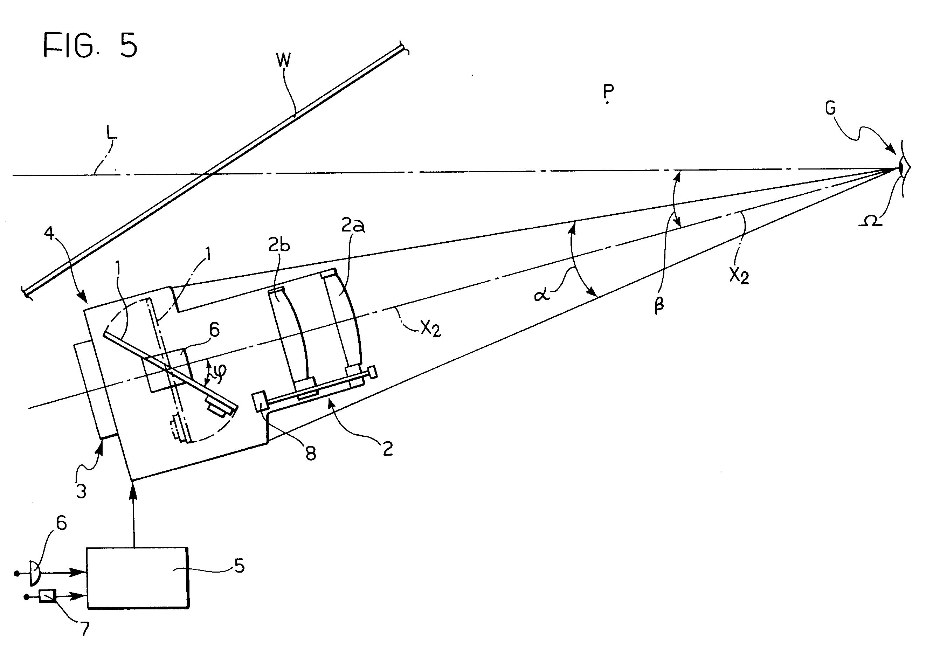

Figure 5 shows how a display device according to the invention can easily be housed in the passenger compartment P of a motor vehicle (not shown as a whole) near the lower region of the windscreen W.

In general, the display device includes a housing 4 mounted on the dashboard of the motor vehicle so as to be slightly below the horizontal line of sight L of the driver G.

For example, the mounting arrangement may be such that the focal axis $X_2$ of the system 2 is inclined downwardly from the horizontal line of sight L at an angle $\beta$ of the order of 15° thereto.

In general, the dimensions of the optical system 2 are selected so that its height corresponds to an aperture angle $\alpha$ of the order of 12-15°.

Figure 5 also shows a system, generally indicated 5, which, on the basis of data from sensors such as a radar sensor 6 and/or an infrared sensor 7 (see prior Italian application No. 67624-A/89 in this connection), creates the two-dimensional artificial image which is transferred as a transparency to the substrate 1 which, typically, is constituted by an SLM device.

Preferably, the substrate 1 is not mounted in a fixed position in the housing 4 but carries associated motor means (for example, a stepped micromotor 6) for pivoting it selectively so as to move the transparency from the position in which it assumes the inclination defined by the angle $\phi$ to the focal axis $X_2$ (see the description above with reference to Figure 4) to a position in which it is substantially perpendicular to the focal axis, that is, a position substantially identical to that shown in Figure 3. It may be moved to this latter position when the display device is to be used to present alphanumeric data to be read by the motorist G; in fact, the depth effect is not necessary in this case and, at least in some circumstances, is not particularly agreeable.

Finally, a further actuator, indicated 8 in Figure 5, is connected to the optical system 2, which is constituted by an outer fixed lens 2a and an inner movable lens 2b, for moving the movable lens 2b along the focal axis $X_2$ so as to create a general zoom effect.

It is clear from the above that the invention provides a device for displaying virtual images, for example, as an anticollision aid for the driving of cars in conditions of poor visibility, which projects towards the driver an artificial perspective representation of the scene outside, which has been processed by the anticollision system 5 to 7 and in which the driver can perceive a depth and relief effect.

The images are generated in a plane which is inclined, preferably greatly inclined, (the angles $\phi$ and $\psi$ may in fact have values of the order of 45° and 30°) so that the upper edge V of the virtual image Iv, which constitutes the region containing the vanishing point of the scene observed by the driver, is formed a long way off but its lower edge V', which constitutes the foreground region, remains less far away. The psychological depth and relief effect is thus due to the accommodation of the driver's eyes as they move through all the intermediate regions between these two extreme regions. As stated, in the display device according to the invention, the transparency 1 is preferably constituted by a liquid crystal matrix (typically an SLM device) which is located between an optical projection system 2 and its focal point F, and on which the artificial image is produced dynamically for projection as a result of its transparency by means of an illumination system. The matrix, which is essentially rectangular, is positioned in a manner such that its upper edge is nearer to the focal plane pi of the optical system than its lower edge.

The physical law linking the inclination of the virtual image Iv to that of the image on the matrix is thus not linear, and small changes in the distances of the upper and lower edges D and D' of the matrix from the focal plane $\pi$ of the optical projection system thus cause large changes in the distances therefrom of the corresponding edges (V and V') of the virtual image Iv produced, resulting in a continuously variable depth and relief effect.

The system described above may be used for any application in which a perspective representation of the real world is to be reconstructed for the driver. Such applications include anticollision systems for vehicles and all head-up display (HUD) applications in general, provided that the image to be projected on the holographic combination element has been processed beforehand (that is "flattened" vertically according to an anamorphic law) so as to compensate for the inclined projection of the two-dimensional image 1.

Naturally, the principle of the invention remaining the same, the details of construction and forms of embodiment may be varied widely with respect to those described and illustrated, without thereby departing from the scope of the present invention.

## Claims

1. A device for displaying a virtual image, including:
   - an optical system (2) with a focal axis ($X_2$) and a focal point (F), and
   - a substrate (1) on which a two-dimensional image is formed in use, through which the optical axis ($X_2$) passes, and which is interposed between the optical system (2) and its focal point (F) so that a virtual image (Iv) of the two-dimensional image is visible through the optical system (2),

   characterised in that the substrate (1) is oriented in a manner such that the two-dimensional image is generally inclined ($\phi$) to the focal axis ($X_2$), so that the virtual image (Iv) is also inclined ($\phi$) to the focal axis ($X_2$) and thus appears to have depth characteristics.

2. A device according to Claim 1, characterised in that the substrate (1) is oriented so that the two-dimensional image is inclined to the focal axis at an angle ($\phi$) of the order of 45°.

3. A device according to Claim 1 or Claim 2, which is intended to be viewed in a substantially horizontal direction, characterised in that the substrate (1) is oriented so that the two-dimensional image has an upper edge (D) and a lower edge (D') which are further from and nearer to the optical system respectively so that the virtual image (Iv) has an upper edge (V) and a lower edge (V') which appear to be further away from and nearer to the optical system respectively.

4. A device according to any one of the preceding claims, characterised in that motor means (6) are associated with the substrate (1) for selectively orienting it to a position in which the two-dimensional image is substantially perpendicular to the optical axis ($X_2$).

5. A device according to any one of the preceding claims, characterised in that the two-dimensional image (1) is transparent.

6. A device according to Claim 5, characterised in that illumination means (3) are associated with the two-dimensional image, and in that the two-dimensional image (1) is between the illumination means (3) and the optical system (2).

7. A device according to any one of Claims 1 to 6, characterised in that the optical system (2) has an aperture ($\phi$) of the order of 12-15°.

8. A device according to any one of the preceding claims, characterised in that the optical system (2) is adjustable (8) so as to have a general zoom function.

9. A device according to any one of Claims 1 to 8, characterised in that the optical system (2) is constituted substantially by a pair of lenses, of which the one (2a) nearest the observer is fixed and the other (2b) is movable.

10. A device according to any one of Claims 1 to 9, characterised in that display means are associated with the substrate (1) for generating an artificial, two-dimensional image thereon.

11. A device according to any one of Claims 1 to 10, used as a display device in a vehicle, characterised in that it includes means (5) for forming on the substrate (1) an image of the area in front of the vehicle.

**12.** A device according to Claim 11, characterised in that it has associated sensor means (6, 7) for generating the two-dimensional image on the substrate (1).

**13.** A device according to Claim 12, characterised in that the sensor means are selected from the group constituted by radar sensors (6) and optical sensors (7), particularly infrared sensors.

**14.** A device according to any of Claims 11 to 13 fitted in a motor vehicle, characterised in that the device is adjacent the lower region of the windscreen (W) in the passenger compartment (P) of the motor vehicle.

FIG. 1  PRIOR ART

FIG. 2  PRIOR ART

FIG. 3 PRIOR ART

FIG. 4

FIG. 5

EP 0 515 328 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 286 962 (HOLTRONIK/BMW) | 1,5,6, 10,11 | G02B27/00 |
| Y | * column 19, line 1 - column 20, line 23; claims 7,11,18; figures 6,7 * | 8,9 | |
| | --- | | |
| X | DE-A-2 633 067 (BUBB) | 1,10 | |
| Y | * page 4, paragraph 2 *<br>* page 5, last paragraph - page 6, last paragraph *<br>* claim 1; figures 1,2 * | 11-14 | |
| | --- | | |
| Y | EP-A-0 312 094 (BMW) | 8,9 | |
| A | | 1,5,6 | |
| | * column 2, line 10 - line 21 *<br>* column 3, line 40 - line 50 * | | |
| | --- | | |
| Y | DE-A-2 557 038 (LICENTIA) | 11-14 | |
| A | | 1,10 | |
| | * claims * | | |
| | --- | | |
| A | DE-A-1 406 596 (RANK-BUSH) | 1,3-5, 10,11 | TECHNICAL FIELDS SEARCHED (Int. Cl.5 ) |
| | * page 5, line 1 - page 8, line 8; figure 1 * | | G02B |
| | ----- | | |

The present search report has been drawn up for all claims

| Place of search | Date of completion of the search | Examiner |
|---|---|---|
| THE HAGUE | 01 SEPTEMBER 1992 | G. Lipp |